(19) Europäisches Patentamt
European Patent Office
Office européen des brevets

(11) Veröffentlichungsnummer: 0 003 235
B1

(12) **EUROPÄISCHE PATENTSCHRIFT**

(45) Veröffentlichungstag der Patentschrift: 09.09.81

(21) Anmeldenummer: 78101795.9

(22) Anmeldetag: 21.12.78

(51) Int. Cl.³: C 08 F 220/28, C 08 F 220/34, C 08 F 220/04, C 08 F 220/58, C 08 F 228/02, C 08 L 33/14

# (54) Wasserlösliche Copolymerisate auf der Basis von hydrophilen äthylenisch ungesättigten Monomeren; Verfahren zur Herstellung dieser Copolymerisate und ihre Verwendung.

(30) Priorität: 24.12.77 DE 2758122

(43) Veröffentlichungstag der Anmeldung: 08.08.79 Patentblatt 79/16

(45) Bekanntmachung des Hinweises auf die Patenterteilung: 09.09.81 Patentblatt 81/36

(84) Benannte Vertragsstaaten: BE CH DE FR GB NL SE

(56) Entgegenhaltungen:
FR - A - 1 243 410
FR - A - 1 383 360
FR - A - 2 007 379
US - A - 3 719 647

(73) Patentinhaber: BASF Aktiengesellschaft
Carl-Bosch-Strasse 38
D-6700 Ludwigshafen (DE)

(72) Erfinder: Becker, Ernst, Dr.
Fichtestrasse 18
D-6700 Ludwigshafen (DE)
Erfinder: Geelhaar, Hans Joachim, Dr.
Max-Slevogt-Strasse 7
D-6710 Frankenthal (DE)
Erfinder: Ley, Gregor, Dr.
In den Trankstuecken
D-6719 Wattenheim (DE)
Erfinder: Schlotterbeck, Dietrich, Dr.
Mainzer Strasse 38
D-6703 Limburgerhof (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 003 235 B1

Courier Press, Leamington Spa, England.

Wasserlösliche Copolymerisate auf der Basis von hydrophilen äthylenisch ungesättigten Monomeren; Verfahren zur Herstellung dieser Copolymerisate und ihre Verwendung

Die Erfindung betrifft wasserlösliche Copolymerisate auf der Basis von hydrophilen äthylenisch ungesättigten Monomeren.

Aus der DE—OS 24 54 971 sind Copolymerisate bekannt, die im wesentlichen aus Einheiten von Polyäthylenglykolacrylat oder -methacrylat und Methylacrylat bestehen; sie dürfen jedoch keine Monomeren, wie Acrylsäure oder Methacrylsäure enthalten, die ionisierbare Salze mit einer Base bilden können. Diese Copolymerisate enthalten somit einen hydrophilen und einen lipophilen Teil. Sie werden als Verdickungsmittel für Anstrichdispersionen verwendet.

Aufgabe der Erfindung ist es, ionisierbare hydrophile Monomere enthaltende Copolymerisate zur Verfügung zu stellen, die bei der Verwendung als Zusatz zu wäßrigen Polymerisatlösungen, Dispersionen oder daraus hergestellten Zubereitungen gleichzeitig als Dispergiermittel und Verdickungsmittel wirken.

Diese Aufgabe wird erfindungsgemäß gelöst durch wasserlösliche Copolymerisate, die aus

(a) 80 bis 2 Gew.-% einer äthylenisch ungesättigten $C_3$- bis $C_5$-Carbonsäure, Acrylamidodimethylpropansulfonsäure, Vinylphosphorsäure oder eines Esters der Formel

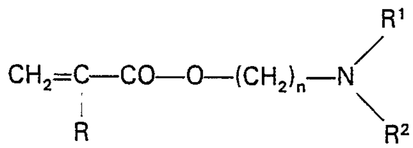

(I),

in der R = H, —$CH_3$, n = 1 bis 4 und $R^1$, $R^2$ = Alkylgruppen mit 1 bis 4 C—Atomen bedeuten, oder Mischungen der genannten Monomeren und

(b) 20 bis 98 Gew.% einer polymerisierbaren äthylenisch ungesättigten Verbindung der Formel

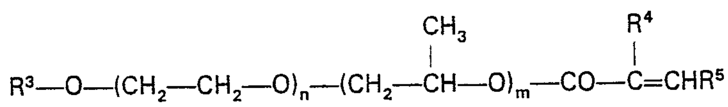

(II),

in der $R^3$ = eine Alkylgruppe mit 1 bis 20 C—Atomen
$R^4$ = H oder —$CH_3$, $R^5$ = H,
n = 2 bis 100 und m = 0 bis 50, bedeuten,
als charakteristischen Monomeren, aufgebaut sind.

Die erfindungsgemäßen wasserlöslichen Copolymerisate vereinigen in bislang unbekannter Weise die Eigenschaften von fast idealen Dispergiermitteln und ausgezeichneten Verdikkern in einer Substanz. Sie werden vor allem als Zusatz zu wäßrigen Polymerisatlösungen, Dispersionen oder daraus hergestellter Zubereitungen verwendet.

Geeignete Monomere der Gruppe (a) sind Acrylsäure, Methacrylsäure, Itaconsäure, Acrylamidodimethylpropansulfonsäure, Vinylsulfonsäure, Vinylphosphorsäure sowie basische Acrylate oder Methacrylate der Formel

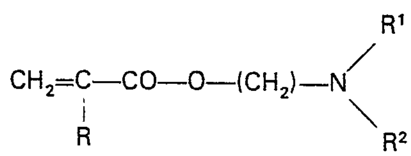

in der R = H, —$CH_3$, n = 1 bis 4 und $R^1$, $R^2$ = gesättigte Alkylreste mit 1 bis 4 C—Atomen bedeuten.

Geeignete basische Acrylate oder Methacrylate sind beispielsweise Dimethylaminomethylacrylat oder -methacrylat, Dimethylaminoäthylacrylat oder -methacrylat, Diäthylaminoäthylacrylat oder -methacrylat, Diäthylaminopropylacrylat oder -methacrylat und Dimethylaminopropylacrylat oder -methacrylat. Die genannten Verbindungen können allein oder in Mischung bei der Copolymerisation eingesetzt werden. In Betracht kommen z.B. Mischungen aus Acrylsäure und Methacrylsäure, Acrylsäure und Vinylphosphorsäure, Acrylsäure und Acrylamidodimethylpropansulfonsäure, Methacrylsäure und Vinylsulfonsäure sowie Methacrylsäure und Dimethylaminoäthylmethacrylat, Acrylsäure und Diäthylaminoäthylacrylat, Acrylsäure und Diäthylaminopropylacrylat sowie Mischungen aus Dimethylaminoäthylacrylat und Diäthylaminoäthylmethacrylat, Dimethylaminoäthylacrylat und Dimethylaminopropylacrylat. Die Monomeren der Gruppe (a) sind zu 80 bis 2, vorzugsweise zu 10 bis 70 Gew.% am Aufbau der erfindungsgemäßen Copolymerisate beteiligt.

Die Monomeren der Gruppe (b) sind polymerisierbare, äthylenisch ungesättigte Verbindungen der Formel

$$R^3—O—(CH_2—CH_2—O)_n—(CH_2—\underset{|}{\overset{CH_3}{C}}H—O)_m—CO—\overset{R^4}{\underset{}{C}}=CH_2 \quad (II),$$

in der $R^3$ ein gesättigter Kohlenwasserstoffrest mit 1 bis 20 C—Atomen oder eine gegebenenfalls $C_1$- bis $C_{12}$-alkyl-substituierte Phenylgruppe, $R^4 = H$ oder $—CH_3$,
n = 2 bis 100, vorzugsweise 25 bis 90 und
m = 0 bis 50, vorzugsweise 0 bis 20 ist. Die erfindungsgemäßen Copolymerisate enthalten 20 bis 98 Gew.% mindestens eines Monomeren der Gruppe (b).

Diese Verbindungen können auch als polymerisierbare, nichtionische Emulgatoren angesprochen werden. Man erhält sie beispielsweise durch Veresterung von Verbindungen der Formel

$$R^3—O—(CH_2—CH_2—O)_n—(CH_2—\overset{CH_3}{C}H—O)_m—OH \quad (III),$$

wobei $R^3$, n und m die in Formel II angegebene Bedeutung haben, mit Acrylsäure oder Metacrylsäure oder durch Umesterung von Estern der Acrylsäure oder Methacrylsäure, die sich von Alkoholen mit 1 bis 8 Kohlenstoffatomen ableiten. Die Verbindungen der Formel III erhält man durch Umsetzung von Alkoholen oder Phenolen mit Äthylenoxid und gegebenenfalls Propylenoxid. Verbindungen dieser Art sind im Handel erhältlich. Sie werden für den Einsatz als Emulgatoren empföhlen.

Die erfindungsgemäßen Copolymerisate können als Monomer (c) bis zu 50 Gew.% mindestens eines anderen äthylenisch ungesättigten, mit den Monomeren der Gruppe (a) und (b) copolymerisierbaren anderen Monomeren einpolymerisiert enthalten. Geeignete Monomere der Gruppe (c) sind beispielsweise Ester, Amide und Nitrile von äthylenisch ungesättigten $C_3$- bis $C_5$-Carbonsäuren, z.B. Acrylsäuremethylester, Methacrylsäureäthylester, Acrylsäurebutylester, Laurylacrylat, Hydroxypropylacrylat, Maleinsäuremono- oder -dibutylester, Acrylamid, Methacrylamid, Acrylnitril und Methacrylnitril. Die Monomeren (c) bilden, wenn sie für sich alleine polymerisiert werden, wasserunlösliche Homopolymerisate. Die Verwendung derartiger Comonomerer sind durch die Förderung nach Wasserlöslichkeit der erfindungsgemäßen Polymerisate sowie durch die bei höheren Gehalten an diesen Monomeren zu beobachtenden Verschlechterung der Eigenschaften als Verdicker und Dispergiermittel Grenzen gestezt.

Zumindest die Salzform der erfindungsgemäßen Copolymerisate ist in Wasser löslich. Sofern als Monomere der Komponente (a) Säuren eingesetzt werden, verwendet man zur Neutralisierung der Copolymerisate Alkalilaugen, Ammoniak oder Amine. Sofern als Monomere der Gruppe (a) basische Acrylate der allgemeinen Formel I verwendet werden, erfolgt eine Neutralisierung des Copolymerisates mit Hilfe anorganischer Säuren, z.B. Ameisensäure, Essigsäure, Phosphorsäure oder Schwefelsäure.

Die erfindungsgemäßen Copolymerisate werden hergestellt, indem man die Monomeren der Gruppen (a), (b) und gegebenenfalls (c) in wäßriger Lösung, in einem mit Wasser mischbaren organischen Lösungsmittel oder in Mischungen aus beiden mit Hilfe radikalischer Polymerisationsinitiatoren copolymerisiert. Als organische Lösungsmittel, die mit Wasser mischbar sind, kommen z.B. ein- oder mehrwertige Alkohole mit 1 bis 4 Kohlenstoffatomen, Ätheralkohole, Ketone, wie Aceton oder Methyläthylketon und Äther, wie Dioxan oder Tetrahydrofuran in Betracht. Diese organischen Lösungsmittel haben die Aufgabe, die Löslichkeit der Monomeren im Polymerisationsmedium zu vermitteln, die Viskosität der Polymerisatlösungen nicht zu stark ansteigen zu lassen und die Polymerisate auch in der nicht neutralisierten Form in Lösung zu halten. Durch die Verwendung der organischen Hilfslösemittel ist es außerdem möglich, auch diegenigen Polymerisationsinitiatoren zu verwenden, die in Wasser schwer löslich sind, beispielsweise Azoverbindungen, wie Azobisisobutyronitril, Perester, Peroxide und Hydroperoxide. Die Polymerisation kann mit allen üblichen radikalischen Polymerisationsinitiatoren durchgeführt werden. Zur Einstellung des gewünschten Molekulargewichts der Copolymeren können bei der Polymerisation die üblichen "Regler" verwendet werden.

Die Auswahl eines bestimmten Hilfslösemittels hat auch einen Einfluß auf das Molekulargewicht der erhaltenen Copolymerisate. Führt man beispielsweise die Polymerisation in Mischungen aus Wasser und Isopropanol durch, so stellt man fest, daß der K—Wert der Copolymerisate bei gleicher Bruttozusammensetzung mit steigendem Gehalt an Isopropanol im Lösungsmittelgemisch fällt.

Die Polymerisation kann kontinuierlich oder diskontinuierlich, unter Normaldruck sowie auch unter vermindertem, wie auch unter erhöhtem Druck vorgenommen werden. Die Polymerisationstemperaturen liegen in dem Bereich von 0 bis 150°C. Im allgemeinen polymerisiert man in einem Temperaturbereich von 20 bis 100°C. Der K—Wert der erfindungsgemäßen Copolymerisate beträgt 20 bis 60, vorzugsweise 30 bis 40 (gemessen in Dimethylformamid bei einer Temperatur von 20°C und einer Konzentration von 3%).

Die erfindungsgemäßen Copolymerisate werden beispielsweise als Verdickungsmittel für Polymerisatdispersionen verwendet. Sie erhöhen insbesondere die Viskosität der Dispersionen im Bereich mittlerer Schergeschwindigkeiten (Bereich >5 und <500 $sec^{-1}$) ohne dabei Fließgrenzen hervorzurufen. Diese Eigenschaft ist besonders interessant, weil übliche Verdicker hohe Fließgrenzen aufbauen, vor allem in Kombinationen mit feinteiligen Dispersionen. Aus diesem Grunde tritt bei den bekannten Mischungen aus Dispersionen und Verdickungsmitteln das sogenannte "stockige" Fließen auf. Die bekannten Systeme weisen daher einen schlechten Verlauf auf, d.h. die auf Basis dieser Systeme hergestellten Farben weisen eine mangelnde Egalisierung von Pinselstrichen und anderen Schichtdickeunterschieden im Anstrich auf.

Neben den guten Eigenschaften der Copolymerisate als Verdicker für wäßrige Polymerisatdispersionen besitzen die erfindungsgemäßen Copolymerisate ganz ausgezeichnete Dispergiermitteleigenschaften für Pigmente und Füllstoffe, die zur Herstellung von Anstrichen und Beschichtungen auf Basis wäßriger Polymerisatdispersionen verwendet werden. Mit Hilfe der erfindungsgemäßen Copolymerisate gelingt es Dispersionsglanzfarben auf Basis von Titandioxidpigmenten und feinteiligen Polymerisatdispersionen mit Pigmentvolumenkonzentrationen (PVK) ~20 und Glanzgraden (gemessen nach Gardener oder mit Reflektometern nach DIN 67 630) G ($\measuredangle$ 20°C) ⩾40% herzustellen. Mit Hilfe dieser Copolymerisate erhält man gut deckende, hochglänzende Dispersionsfarben im Sinne der Norm gemäß DIN 53 778, Blatt 1, auf Basis von Titandioxidpigmenten. Die erfindungsgemäßen Copolymerisate können außerdem als Dispergiermittel und Verdickungsmittel bei der Herstellung von Papierstreichmassen verwendet werden. Für den Zusatz der erfindungsgemäßen Copolymerisate zu wäßrigen Polymerisatdispersionen oder Polymerisatlösungen verwendet man 0,1 bis 10, vorzugsweise 0,5 bis 5% des Copolymerisates.

Die Erfindung wird anhand der folgenden Beispiel näher erläutert. Die in den Beispielen angegebenen Teile sind Gewichsteile, die Angaben in Prozent beziehen sich auf das Gewicht. Die K—Werte wurden nach H. Fikentscher, Cellulosechemie *13*, 58 bis 64 und 71 bis 74 (1932), in 3%igen Dimethylformamidlösungen bei 20°C bestimmt; dabei bedeutet $K = k \cdot 10^3$.

Herstellung eines Monomeren der Formel

$$C_{18}H_{37}—O—(CH_2—CH_2—O)_{80}—CO—CH=CH_2$$

In einem 2 1 3-Halsrundkolben mit Heizbad, Kühler und einer Vorrichtung zum Wasserauskreisen werden 1 069 g eines Reaktionsproduktes aus Stearylalkohol und Äthylenoxid im Molverhältnis 1:80 und 600 g Toluol vorgelegt und bei ca. 60°C gelöst. Dann werden 22,3 g Acrylsäure und 5,67 g 96%ige Schwefelsäure zugegeben. Man erhitzt den Kolbeninhalt für die Dauer von ca. 4 Stunden auf 122 bis 126°C und kreist aus dem bei 112 bis 114°C übergehenden Toluol-Wasser-Gemisch das Reaktionswasser aus. Man kühlt die Mischung anschließend auf ca. 70°C, gibt 12 g Soda in 50 g Wasser zu, schüttelt gründlich und kreist das zugesetzte Wasser wie oben aus. Man kühlt erneut auf ca. 70°C, nutscht die anorganischen Salze ab und zieht das Toluol bei einem Vakuum von 30 bis 5 mm und einer Innentemperatur von maximal 60° ab. Man erhält ca. 900 g eines bräunlich-gelben in Methanol klar löslichen Rohproduktes mit einem Erweichungspunkt von ca. 50°, einer Säurezahl von ca. 0,25 und einer Esterzahl von 94,5%, entsprechend einer Ausbeute von ca. 80% der Theorie.

## Beispiel 1

### Herstellung eines erfindungsgemäßen Copolymerisats

In einem Polymerisationsgefäß, das mit einem Rührer, Rückflußkühler, Thermometer, Stickstoffeinleitung und -auslaß versehen ist und in ein Wasserbad eintaucht, werden 280 Teile einer Verbindung der Formel

$$C_{16}H_{33}—O—(CH_2—CH_2—O)_{80}—CO—CH=CH_2 \qquad (IV),$$

140 Teile Methacrylsäure, 630 Teile Isopropanol und 630 Teile Wasser vorgelegt. Die Mischung wird gerührt und auf eine Temperatur von etwa 50°C erwärmt, wobei man eine klare Lösung erhält. Dann fügt man 14 Teile Azobisisobutyronitril zu und erhitzt die Mischung 3 Stunden lang zum Sieden. Danach läßt man das Reaktionsgemisch abkühlen und erhält eine klare gelbliche Polymerisatlösung mit einem Feststoffgehalt von ca. 25%. Das wasserlösliche Copolymerisat hat einen K—Wert von 30.

Wenn man die Polymerlösung mit Hilfe einer 250 $\mu m$ Rakel auf Glas aufträgt und trocknet, so erhält man einen klaren hochglänzenden Film geringer Klebrigkeit. Der Film kann bei längerer Lagerung ganz oder teilweise opak werden, weil sich sphärolitartige Strukturen mit Durchmessern bis zu mehreren Millimetern bilden.

Die Viskosität wäßriger Lösungen steigt bei Zusatz von Alkali an.

### Herstellung einer Dispersionsglanzfarbe

Um eine Dispersionsglanzfarbe herzustellen, reibt man 80 Teile eines handelsüblichen Titandioxidpigments mit 40 Teilen der oben beschriebenen 25%igen wäßrigen Copolymerisatlösung

und 40 Teilen eines Gemisches aus Isopropanol und Wasser (Gewichtsverhältnis 1:1) in einem Dissolver und läßt die Mischung anschließend einmal durch eine Coruma-Mühle passieren. 15 Teile der erhaltenen Pigmentpaste werden dann mit 35 Teilen einer 50%igen wäßrigen Dispersion eines Copolymerisats aus 50 Gew.% Styrol, 47,5% Butylacrylat und 0,5% Acrylsäure und 5 Teilen Wasser zu einer Dispersionsfarbe verarbeitet. Man erhält eine gut fließende Dispersionsfarbe mit einer Pigmentvolumenkonzentration von etwa 10. Der Glanz eines Rakelstrichs von 250 $\mu$m Spalthöhe auf Glas liefert bei G ( $\measuredangle$ 20°) $\simeq$70. Ein analog hergestelltes Muster mit Pigmentvolumenkonzentration $\approx$20 ergab G ( $\measuredangle$ 20°) $\simeq$42.

Prüfung der Verdickungswirkung

Um die Verdickungswirkung des oben beschriebenen erfindungsgemäßen Copolymerisats zu prüfen, werden zu einer 45%igen Dispersion eines Copolymerisates aus 54,5% Methylmethacrylat, 43,5% Äthylhexylacrylat und 2,0% N-Methylolmethacrylamid unterschiedliche Mengen des oben beschriebenen wasserlöslichen Copolymerisats zugesetzt. Und zwar betragen diese Mengen, jeweils bezogen auf festes Copolymerisat, 2,5, 10 und 15 Gew.%. Die Mischungen werden dann jeweils auf einen pH-Wert in dem Bereich von 8 bis 9 eingestellt. Dann werden die Fließkurven im Schergeschwindigkeitsbereich $D > 1 < 500$ sec$^{-1}$ im Rheomat 30 aufgenommen. Wie die Figur 1 zeigt, erreicht man eine merkliche Verdickung der Dispersion, ohne dabei nennenswerte Fließgrenzen aufzubauen. Auch die visuelle Beobachtung des Fließens und des Verlaufs der verdickten Dispersionen bestätigt, daß keine nennenswerten Fließgrenzen aufgebaut werden. Die Viskosität bei einer Konzentration von 5 Gew.% ergibt sich aus der Fließkurve

$$(\eta = \frac{\tau}{D})$$

zu 1 000 mPa.s bei D = 100 sec$^{-1}$.

Beispiel 2

Man verfährt wie im Beispiel 1 angegeben, verwendet jedoch als Monomer (a) 210 Teile Methacrylsäure und als Monomer (b) 210 Teile einer Verbindung der Formel

$$C_{16}H_{33}—O—(CH_2—CH_2—O)_{50}—CO—CH=CH_2$$

Man erhält eine klare gelbliche Polymerisatlösung mit einem Feststoffgehalt von 25,2%. Das Copolymerisat hat einen K-Wert von 36,3, es ist in Alkali löslich.

Die Verdickungswirkung wurde gemäß der Vorschrift von Beispiel 1 geprüft. Bei einer Konzentration von 5 Gew.% beträgt die Viskosität ca. 8 500 mPa.s bei D = 100 sec$^{-1}$.

Beispiel 3

Man verfährt wie in Beispiel 1, verwendet aber als Monomer (b) 140 Teile Acrylsäureester eines mit 25 Mol/Mol Äthylenoxid umgesetzten Stearylalkohols und als Monomer (a) 280 Teile Methacrylsäure. Die klare rötlich-gelbe Polymerlösung hat einen Feststoffgehalt von 25,7%, der K-Wert beträgt ca. 31. Die Prüfung der Verdickungswirkung ergab unter gleichen Bedingungen wie in Beispiel 1 eine Viskosität von ca. 12 500 mPa.s bei D = 100 sec$^{-1}$.

Beispiel 4

Man verfährt wie im Beispiel 1 angegeben, verwendet aber als Monomer (b) 140 Teile des Acrylsäureesters eines Talgfettalkohols, umgesetzt mit ca. 15 Mol/Mol Äthylenoxid und als Monomer (a) 280 Teile Methacrylsäure. Die rötlichgelbe Polymerisatlösung hat einen Feststoffgehalt von 26%. Der K-Wert des Polymerisats beträgt 38,5. Die Prüfung der Verdickungswirkung ergab unter den im Beispiel 1 angegebenen Bedingungen eine Viskosität von ca. 11 600 mPa.s bei D = 100 sec$^{-1}$.

Beispiel 5

Man verfährt wie im Beispiel 1 angegeben, verwendet aber als Monomer (b) eine Mischung aus 110 Teilen des Acrylsäureesters aus Beispiel 1 und 168 Teile des Acrylsäureesters aus Beispiel 2 sowie als Monomer (a) 142 Teile Methacrylsäure. Der Feststoffgehalt der Polymerlösung betrug 24,3%, der K-Wert des Polymerisats 34,4. Die Viskosität bei der Verdickerprüfung gemäß Beispiel 1 lag bei ca. 10 000 mPa.s bei D = 100 sec$^{-1}$.

Beispiel 6

Man verfährt wie im Beispiel 2 angegeben, verwendet jedoch statt der Methacrylsäure die gleiche Menge Acrylsäure. Man erhält eine gelblich-braune Polymerisatlösung vom Feststoffgehalt 24,7%; der K-Wert liegt bei 32,5. Die Verdickerprüfung gemäß Beispiel 1 gab eine Viskosität von 4 200 mPa.s bei D = 100 sec$^{-1}$.

Beispiel 7

Man verfährt wie im Beispiel 1 angegeben, verwendet aber 236 Teile des Acrylesters aus Beispiel 1 und als Monomer (a) eine Mischung aus 104 Teilen Methacrylsäure und 80 Teilen Acrylsäure. Die entstandene Polymerisatlösung hat einen Feststoffgehalt von ca. 26%; der K-Wert liegt bei 37,1. Die Verdickerprüfung gemäß Beispiel 1 ergab eine Viskosität von ca. 6 000 mPa.s bei $D = 100\ sec^{-1}$.

Beispiel 8

Man verfährt wie im Beispiel 1 angegeben, verwendet aber 278 Teile des Esters aus Beispiel 1 und als Monomer (a) eine Mischung aus 84 Teilen Methacrylsäure und 58 Teilen Acrylamidodimethylpropansulfonsäure. Die entstandene Polymerisatlösung hat einen Feststoffgehalt von 25,7%; das Polymerisat besitzt einen K-Wert von 34,8. Bei der Verdickerprüfung gemäß Beispiel 1 ergab sich eine Viskosität von ca. 3 400 mPa.s bei $D = 100\ sec^{-1}$.

Beispiel 9

Man verfährt wie im Beispiel 1 angegeben, verwendet aber 280 Teile des Esters aus Beispiel 2 und als Monomer (a) eine Mischung aus 140 Teilen Methacrylsäure und 390 Teilen Dimethylaminoäthylmethacrylat. Die entstandene Polymerisatlösung hat einen Feststoffgehalt von ca. 37%, der K-Wert des Polymeren liegt bei 25,5. Die Verdickerprüfung gemäß Beispiel 1 ergab eine Viskosität von ca. 4 000 mPa.s bei $D = 100\ sec^{-1}$.

Beispiel 10

Man verfährt wie bei Beispiel 1 angegeben, verwendet jedoch 190 Teile des Esters aus Beispiel 1, als Monomer (a) 142 Teile Methacrylsäure und als Monomer (c) 88 Teile Methylacrylat. Der Feststoffgehalt der Polymerisatlösung beträgt 26,3%; der K-Wert 37,0. Die Verdickerprüfung gemäß Beispiel 1 ergab eine Viskosität von ca. 5500 mPa.s bei $D = 100\ sec^{-1}$.

Beispiel 11

Man verfährt wie im Beispiel 1 angegeben, verwendet jedoch 210 Teile des Esters aus Beispiel 1, als Monomer (a) 142 Teile Methacrylsäure und als Monomer (c) 68 Teile Hydroxypropylacrylat. Die Polymerlösung hat einen Feststoffgehalt von 26,2%; der K-Wert des Polymeren betrug 35,2. Die Verdickerprüfung gemäß Beispiel 1 ergab eine Viskosität von 5 200 mPa.s bei $D = 100\ sec^{-1}$.

Beispiel 12

Man verfährt wie im Beispiel 1 angegeben, verwendet aber 252 Teile des Esters aus Beispiel 1, als Monomer (a) 142 Teile Methacrylsäure und als Monomer (c) 26 Teile Laurylacrylat. Die entstandene Polymerlösung hat einen Feststoffgehalt von 26,2%; der K-Wert des Polymeren liegt bei 33,3. Die Verdickerprüfung gemäß Beispiel 1 ergab eine Viskosität von 4 350 mPa.s bei $D = 100\ sec^{-1}$.

Beispiel 13

Man verfährt wie im Beispiel 1 angegeben, verwendet jedoch als Lösemittel eine Mischung von 756 Teilen Propylenglykol und 504 Teilen Wasser. Der Feststoffgehalt der Polymerlösung betrug 24,8%; der K-Wert des Polymeren 41,6. Die Verdickerprüfung gemäß Beispiel 1 ergab eine Viskosität von 4 750 mPa.s bei $D = 100\ sec^{-1}$.

Beispiel 14

Man verfährt wie im Beispiel 1 angegeben, verwendet aber als Lösemittel eine Mischung aus je 420 Teilen Isopropanol, Propylenglykol und Wasser. Die Polymerlösung hat einen Feststoffgehalt von 29,5%; der K-Wert betrug 36,0. Die Viskosität bei der Verdickerprüfung gemäß Beispiel 1 war ca. 7 000 mPa.s bei $D = 100\ sec^{-1}$.

**Patentansprüche**

1. Wasserlösliche Copolymerisate, die aus

(a) 80 bis 2 Gew.% einer äthylenisch ungesättigten $C_3$- bis $C_5$-Carbonsäure, Acrylamidodimethylpropansulfonsäure, Vinylsulfonsäure, Vinylphosphorsäure oder eines Esters der Formel

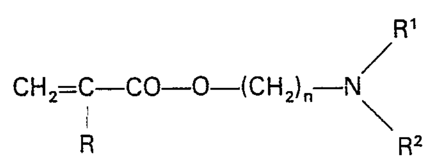

(I),

in der R = H, $-CH_3$, n = 1 bis 4 und $R^1$, $R^2$ = Alkylgruppen mit 1 bis 4 C-Atomen bedeuten, oder Mischungen der genannten Monomeren und

(b) 20 bis 98 Gew.% einer polymerisierbaren äthylenisch ungesättigten Verbindung der Formel

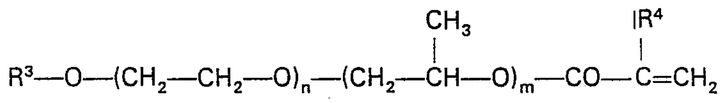

(II),

in der $R^3$ = eine Alkylgruppe mit 1 bis 20 C-Atomen, $R^4$ = H oder $—CH_3$, n = 2 bis 100 und m = 0 bis 50 bedeuten,
als charakteristischen Monomeren aufgebaut sind.

2. Wasserlösliche Copolymerisate gemäß Anspruch 1, dadurch gekennzeichnet, daß sie zusatzlich.

(c) bis zu 50 Gew.% mindestens eines anderen äthylenisch ungesättigten, mit (a) und (b) copolymerisierbaren Monomeren einpolymerisiert enthalten.

3. Verfahren zur Herstellung der wasserlöslichen Copolymerisate gemäß den Ansprüchen 1 und 2, dadurch gekennzeichnet, daß man

(a) 80 bis 2 Gew.% einer äthylenisch ungesättigten $C_3$- bis $C_5$-Carbonsäure, Acrylamidodimethylpropansulfonsäure, Vinylsulfonsäure, Vinylphosphorsäure oder eines Esters der Formel

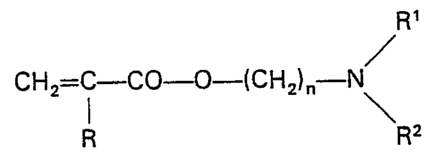

(I),

in der R = H, $—CH_3$, n = 1 bis 4 und $R^1$, $R^2$ = Alkylgruppen mit 1 bis 4 C-Atomen bedeuten, oder Mischungen der genannten Monomeren und

(b) 20 bis 98 Gew.% einer polymerisierbaren äthylenisch ungesättigten Verbindung der Formel

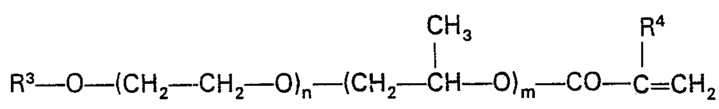

(II),

in der $R^3$ = eine Alkylgruppe mit 1 bis 20 C-Atomen, $R^4$ = H oder $—CH_3$, n = 2 bis 100 und m = 0 bis 50, bedeuten, in wäßriger Lösung, in einem mit Wasser mischbaren organischen Lösungsmittel oder in Mischungen aus beiden mit Hilfe radikalischer Polymerisationsinitiatoren copolymerisiert.

4. Verfahren gemäß Anspruch 3, dadurch gekennzeichnet, daß man als Komponente (a) Mischungen aus Acrylsäure oder Methacrylsäure und mindestens einer Verbindung der Formel

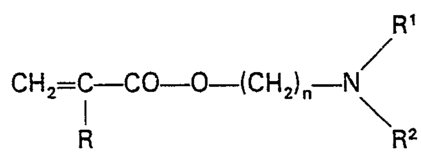

(I),

in der R = H, $—CH_3$, n = 2 oder 3, $R^1$, $R^2$ = $C_1$- bis $C_4$-Alkylgruppe bedeuten, einsetzt.

5. Verwendung der wasserlöslichen Copolymerisate gemäß den Ansprüchen 1 bis 4 als Zusatz zu wäßrigen Polymerisatlösungen, Dispersionen oder daraus hergestellten Zubereitungen, wie Farben, Streichmassen, Dichtungs- und Klebemittel.

**Revendications**

1. Copolymères hydrosolubles, constitués de:

(a) 80 à 2% en poids d'un acide carboxylique en $C_3$ à $C_5$ à insaturation éthylénique, d'acide acrylamidodiméthylpropane-sulfonique, d'acide vinyl-sulfonique, d'acide vinyl-phosphorique ou d'un ester de la formule

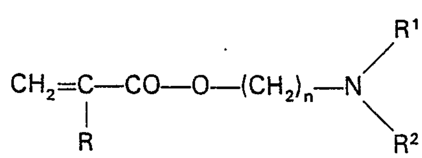

(I),

dans laquelle R = H ou $—CH_3$, n vaut 1 à 4 et $R^1$ et $R^2$ représentent des radicaux alcoyle en $C_1$ à $C_4$, ou d'un mélange de ces monomères, et

(b) 20 à 98% en poids d'un composé à insaturation éthylénique polymérisable de la formule

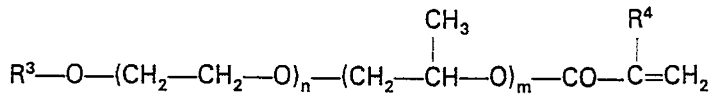

(II),

dans laquelle $R^3$ désigne un radical alcoyle en $C_1$ à $C_{20}$, $R^4$ = H ou $—CH_3$, n vaut 2 à 100 et m vaut 0 à 50, en tant que monomères caractéristiques.

2. Copolymères hydrosolubles suivant la revendication 1, caractérisés en ce qu'ils contiennent en outre en liaison copolymère:

(c) jusqu'à 50% en poids d'un autre monomère à insaturation éthlénique, copolymérisable avec (a) et (b).

3. Procédé de préparation de copolymères hydrosolubles suivant l'une des revendications 1 et 2, caractérisé en ce que l'on copolymérise:

(a) 80 à 2% en poids d'un acide carboxylique en $C_3$ à $C_5$ à insaturation éthylénique, d'acide acrylamido-diméthylpropane-sulfonique, d'acide vinyl-sulfonique, d'acide vinyl-phosphorique ou d'un ester de la formule

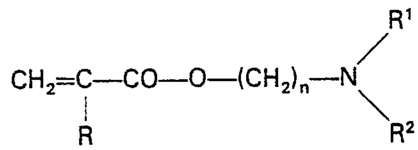

(I),

dans laquelle R = H ou $—CH_3$, n vaut 1 à 4 et $R^1$ et $R^2$ représentent des radicaux alcoyle en $C_1$ à $C_4$, ou d'un mélange de ces monomères, et

(b) 20 à 98% en poids d'un composé à insaturation éthylénique polymérisable de la formule

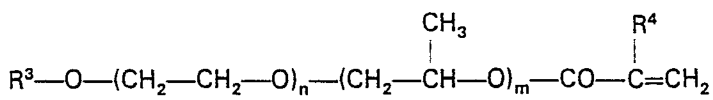

(II),

dans laquelle $R^3$ désigne un radical alcoyle en $C_1$ à $C_{20}$, $R^4$ = H ou $—CH_3$, n vaut 2 à 100 et m vaut 0 à 50, en solution aqueuse ou dans un solvant organique miscible à l'eau ou dans un mélange des deux à l'aide d'initiateurs de polymérisation formant des radicaux libres.

4. Procédé suivant la revendication 3, caractérisé en ce que la composante (a) est un mélange d'acide acrylique ou d'acide méthacrylique et d'au moins un composé de la formule

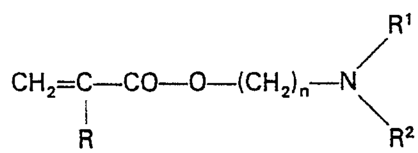

dans laquelle R = H ou $—CH_3$, n vaut 2 ou 3 et $R^1$ et $R^2$ représentent des radicaux alcoyle en $C_1$ à $C_4$.

5. Utilisation des copolymères hydrosolubles suivant l'une des revendications 1 à 4 comme additifs pour solutions ou dispersions aqueuses de polymères et(ou) produits préparés à partir de celles-ci comme les peintures, les pâtes à enduire, les matières lutantes et les matières adhésives.

**Claims**

1. A water-soluble copolymer which comprises, as characteristic monomers,

(a) from 80 to 2% by weight of an ethylenically unsaturated $C_3$- to $C_5$-carboxylic acid, acrylamidodimethylpropanesulfonic acid, vinylsulfonic acid or vinylphosphoric acid, or of an ester of the formula

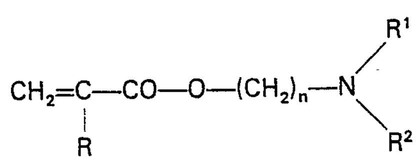

(I),

where R is H or $—CH_3$, n is from 1 to 4 and $R^1$ and $R^2$ are alkyls of 1 to 4 carbon atoms, or of mixtures of the said monomers, and

(b) from 20 to 98% by weight of a polymerizable ethylenically unsaturated compound of the formula

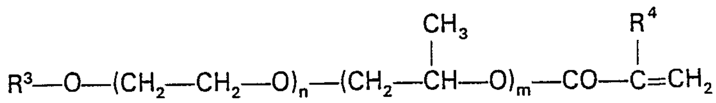 (II),

where $R^3$ is alkyl of 1 to 20 carbon atoms, $R^4$ is H or $—CH_3$, $R^5$ is H, n is from 2 to 100 and m is from 0 to 50.

2. A water-soluble copolymer as claimed in claim 1, characterized in that it additionally contains, as copolymerized units,

(c) up to 50% by weight of at least one other ethylenically unsaturated monomer copolymerizable with (a) and (b).

3. A process for the preparation of the water-soluble copolymer as claimed in claims 1 and 2, characterized in that

(a) from 80 to 2% by weight of an ethylenically unsaturated $C_3$- to $C_5$-carboxylic acid, acrylamidodimethylpropanesulfonic acid, vinylsulfonic acid or vinylphosphoric acid, or of an ester of the formula

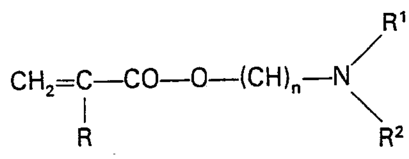 (I),

where R is H or $—CH_3$, n is from 1 to 4 and $R^1$ and $R^2$ are alkyls of 1 to 4 carbon atoms, or of mixtures of the said monomers, and

(b) from 20 to 98% by weight of a polymerizable ethylenically unsaturated compound of the formula

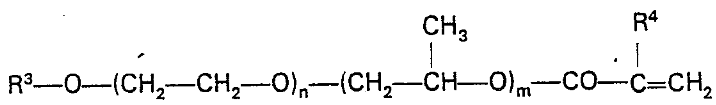 (II),

where $R^3$ is alkyl of 1 to 20 carbon atoms, $R^4$ is H or $—CH_3$, n is from 2 to 100 and m is from 0 to 50, are copolymerized in aqueous solution or in a water-miscible organic solvent or in a mixture of water with the said solvent, by means of a free radical polymerization initiator.

4. A process as claimed in claim 3, characterized in that component (a) comprises a mixture of acrylic acid or methacrylic acid and at least one compound of the formula

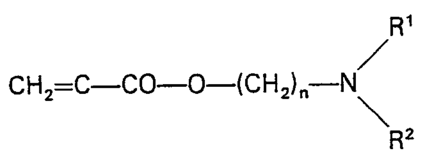

where R is H or $—CH_3$, n is 2 or 3 and $R^1$ and $R^2$ are $C_1$- to $C_4$-alkyls.

5. Use of the water-soluble copolymer as claimed in claims 1 to 4 as additive to aqueous polymer solutions or dispersions or to formulations produced therefrom, such as paints, coating compositions, sealants and adhesives.

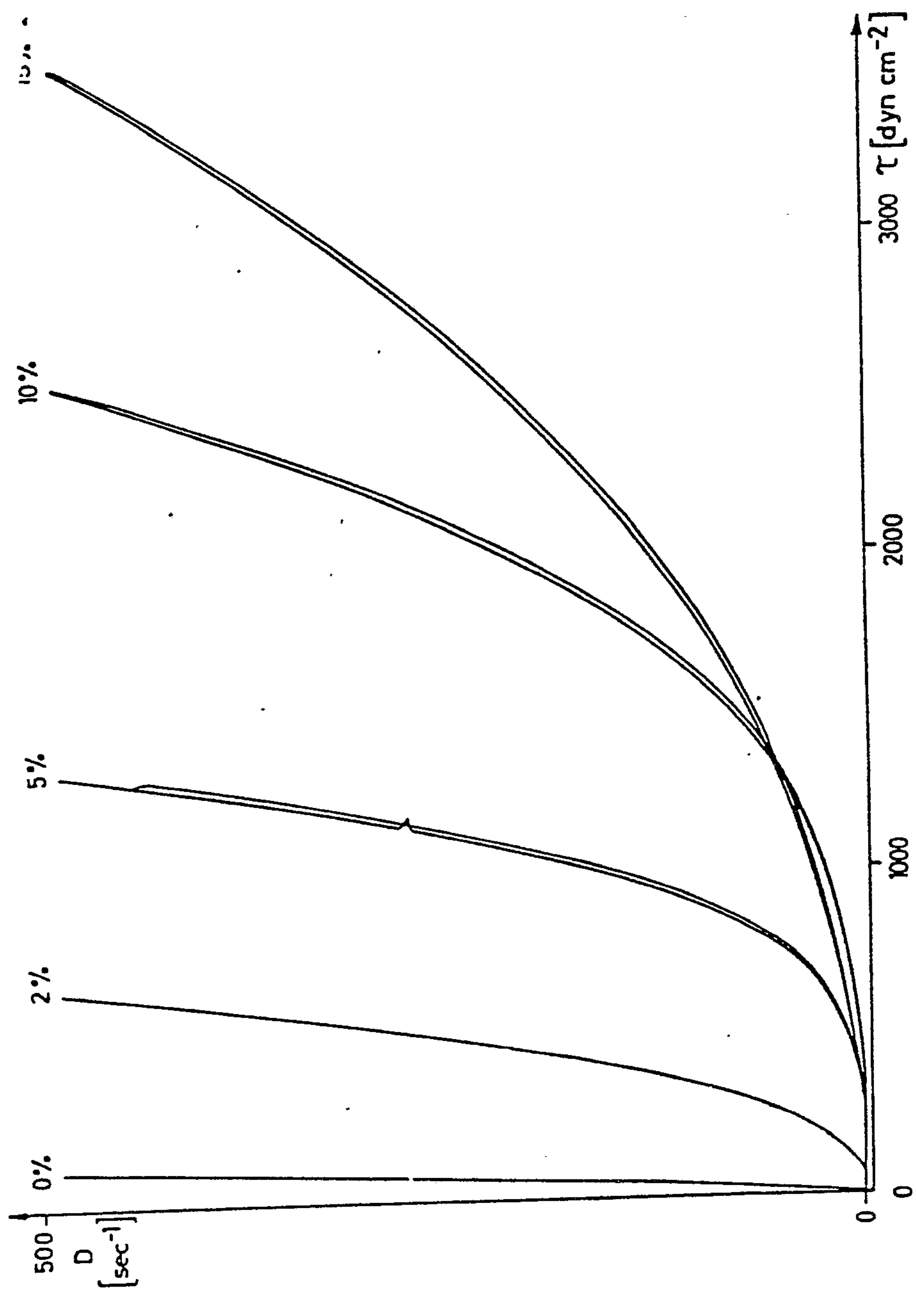

0%
2%
5%
10%
500
D
[sec⁻¹]
0
0
1000
2000
3000
τ [dyn cm⁻²]